# EUROPÄISCHE PATENTSCHRIFT

(11) **EP 0 892 414 B1**
(45) Veröffentlichungstag und Bekanntmachung des Hinweises auf die Patenterteilung: **09.01.2002**
(21) Anmeldenummer: 98111041.4
(22) Anmeldetag: 16.06.1998
(51) Int. Cl.: H01H 3/16, H01H 5/02, G01D 13/26

(54) **Kontakteinrichtung für eine Analoganzeigevorrichtung**
Contact device for an analog display device
Dispositif de contact pour dispositif d'affichage analogique

(30) Priorität: 17.06.1997 DE 29710576 U
(43) Veröffentlichungstag der Anmeldung: 20.01.1999
(73) Patentinhaber: WIKA ALEXANDER WIEGAND GmbH & CO., D-63911 Klingenberg (DE)
(72) Erfinder: Julien, Hermann, Dipl.-Ing. (FH), 63911 Klingenberg (DE); Klein, Kurt, Elektromeister, 63911 Klingenberg (DE); Rothenbach, Thomas, Dipl.-Ing. (FH), 63927 Bürgstadt (DE); Lucht, Jürgen, Dipl.-Ing. (FH), 63927 Bürgstadt (DE)
(74) Vertreter: Pellmann, Hans-Bernd, Dipl.-Ing.

(56) Entgegenhaltungen:
- US-A- 4 021 627

## Beschreibung

Die vorliegende Erfindung betrifft eine Kontakteinrichtung für eine Analoganzeigevorrichtung zum Erfassen eines Grenzwerts.

Aus dem Stand der Technik sind Analoganzeigegeräte bekannt, die sowohl in der Fahrzeugtechnik als Geschwindigkeits- Temperatur- und Drehzahlanzeigen verwendet werden, wie auch in hydraulischen und pneumatischen Bereichen zur Anzeige vorherrschender Drücke, Füllstände u. dgl. einsetzbar sind.

Eine kontakteinrichtung nach den Oberbegriff des Anspruchs 1 ist aus Dokument US 4 021 627 bekannt.

Vorliegend soll nunmehr der technische Hintergrund der Erfindung anhand eines Kontaktmanometers erläutert werden, der außer der rein mechanischen, visuell ablesbaren Druckanzeigevorrichtung mit einer elektrischen Zusatzeinrichtung ausgerüstet ist. Das Grundprinzip des bekannten Kontaktmanometers besteht darin, daß beispielsweise der Winkelausschlag des Zeigers oder die Drehbewegung der Zeigerwelle zur Betätigung der elektrischen Zusatzeinrichtung wie ein Grenzwertschalter oder ein Fernübertrager genutzt wird. Hierbei unterscheidet man zwischen Kontakteinrichtungen, die einen angeschlossenen elektrischen Stromkreis über einen mit dem Zeiger bewegten Kontaktarm öffnen oder schließen, um hierdurch beispielsweise ein akustisches Signal zu erzeugen, und solchen Kontakteinrichtungen, welche einen kleinen Dauermagneten vorzugsweise an einem ortsfesten Kontaktstift vorsehen, der den Kontaktarm bei einem vorbestimmten Abstand anzieht und somit den Kontakt schließt.

Die erstgenannte Ausführungsform einer Kontakteinrichtung wird allgemein als Schleichkontakt bezeichnet. Sie ist konstruktiv äußerts einfach aufgebaut, hat jedoch den Nachteil, daß während des Schließ- und Öffnungsvorgangs aufgrund der langsamen Zeigerbewegung ein Lichtbogen entsteht, der zu einem Verbrennen des Kontaktwerkstoffs führt. Hingegen bewirkt die Anordnung eines Magneten unabhängig von der Zeigerbewegungsgeschwindigkeit ein schnelles Schließen des Schalters, wodurch die Ausbildung eines Lichtbogens nahezu vermieden wird. Beim Öffnen des Kontakts hält der Magnet den Kontaktarm so lange angezogen, bis der Druck den Einstellwert so weit überschritten hat, d.h. sich so weit geändert hat, daß der Kontaktarm abrupt aus dem Bereich des Lichtbogens schnellt. Aus diesem Grund wird die letztgenannte Kontakteinrichtung auch als Magnetsprungkontakt bezeichnet.

Grundsätzlich erfordert jedoch die Anordnung einer elektrischen Zusatzeinrichtung wie vorstehend beschrieben eine wesentliche Änderung der Struktur des Anzeigegeräts oder Instruments, derart, daß Standardanzeigegeräte nicht mit den elektrischen Zusatzeinrichtungen ausgerüstet werden können. So muß der Kontaktarm unabhängig vom Zeiger an der Zeigerwelle gelagert und ggf. durch einen eigenen Getriebemechanismus angetrieben werden. Der hierfür benötigte Bauraum läßt sich nur durch ein entsprechendes Vergrößern des Anzeigegerätegehäuses sowie eine erhebliche Verlängerung der Zeigerwelle schaffen. Mit anderen Worten ausgedrückt, müssen vollständig neu entwickelte Anzeigegeräte speziell für die jeweilige Zusatzeinrichtung gefertigt werden, was zu Mehrkosten bei deren Herstellung gegenüber einer Standardausführung führt.

Angesichts dieser Problematik ist es eine Aufgabe der vorliegenden Erfindung, eine Kontakteinrichtung zu schaffen, die auch bei einem Standardanzeigegerät einsetzbar ist.

Diese Aufgabe wird erfindungsgemäß mit einer Kontakteinrichtung mit den Merkmalen des Anspruchs 1 gelöst.

Die Erfindung besteht demzufolge in der Anordnung einer biegeelastischen Kontaktfahne in einer Analoganzeigevorrichtung, die durch die Zeigereinheit derart betätigbar ist, daß bei Erreichen einer bestimmten Position der Zeigereinheit die Kontaktfahne mit einem ortsfesten Kontakt kurzschließt. Durch die biegeelastische Ausbildung der Kontaktfahne als Kontaktarm kann somit auf eine externe Lagerung der Kontaktfahne beispielsweise an der Drehwelle des Zeigers und einen gesonderten Antrieb vollständig verzichtet werden. Die gesamte Kontruktion gestaltet sich hierdurch nicht nur besonders einfach, sonder sie kann auch ohne größeren Aufwand in Standardanzeigevorrichtunge eingebaut werden.

In vorteilhafter Weise ist die Kontaktfahne an der Zeigerbuchse befestigt, wobei die Kontaktfahne an ihrem hinteren Endbereich in einem Bogen von im wesentlichen 180° spiralförmig um die Zeigerbuchse geführt ist, um dann in einen im wesentlichen geraden Schaft überzugehen, der am vorderen Endbereich der Kontaktfahne in mehrere Zacken aufgegabelt ist, welche Kontaktflächen ausbilden. Durch diese Gestaltung wird zum einen gewährleistet, das die Federreaktionskraft auf den Zeiger nicht zu groß wird, so daß die Anzeigegenauigkeit nahezu unbeeinflußt bleibt, zum anderen kann insbesondere durch die endseitige Aufgabelung der Kontaktfahne in vorzugsweise drei Zacken eine ausreichende Kontakfläche für einen sicheren Kontaktschluß auch bei geringen Kontaktkräften erzielt werden.

Des weiteren ist es besonders vorteilhaft, wenn der ortsfeste Kontakt ein Kontaktstift bestehend aus einer Kontakthülse ist, in der ein Permanentmagnet angeordnet ist, der auf die Kontaktfahne bei einem bestimmten Abstand eine Anziehungskraft ausübt, die unter Überwindung der Eigenelastizität die Kontaktfahne auf die Kontakthülse zieht. Wie eingangs bereits ausgeführt wurde, entspricht diese Weiterbildung einem Magnetspringkontakt mit relativ niedrigem Verschleiß und sicherem Durchschaltverhalten.

Weitere vorteilhafte Ausbildungen der Erfindung sind Gegenstand der Unteransprüche.

Die Erfindung wird nachstehend anhand eines bevorzugten Ausführungsbeispiels unter Bezugnahme auf die begleitenden Zeichnungen näher erläutert.
Fig. 1a und 1b zeigen eine Prinzipskizze eines Zeigers eines nicht weiter dargestellten Analoganzeigevorrichtungs mit einer elektrischen Kontakteinrichtung der Magnetspringkontaktbauart,
Fig. 2 zeigt eine Kontaktbuchse für einen ortsfesten Kontaktstift,
Fig. 3 zeigt die Draufsicht einer Kontaktfahne,
Fig. 4 zeigt eine Messingbuchse zur Löthilfe der Kontaktfahne an die Zeigerbuchse und
Fig. 5a und 5b zeigen die Lagebeziehung zwischen dem Zeiger und der Kontaktfahne.

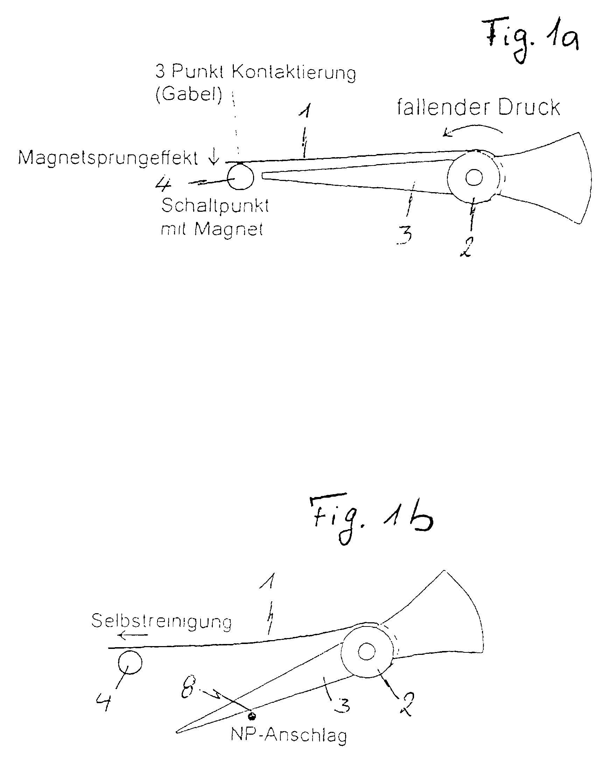

Gemäß der Fig. 1a besteht die Kontakteinrichtung nach einem bevorzugten Ausführungsbeispiel der Erfindung aus einem federnden Kontaktgeber in Form einer flexiblen Kontaktfahne 1 vorzugsweise aus einem ferromagnetischen, vergoldeten Nickelmaterial, die an einer Zeigerbuchse 2 ohne zusätzliche externe Lager angekoppelt ist. Die Kontaktfahne 1 ist dabei bezüglich eines Zeigers 3 eines nicht weiter dargestellten Anzeigeinstruments oder -geräts derart winkelversetzt angeordnet, daß bei einem Sinken des angezeigten Wertes, d. h. bei einer entsprechenden Drehung des Zeigers 3 gegen dessen Nullstellung, die Kontaktfahne 1 sich einem, an einem Zifferblatt befestigten Kontaktstift 4 annähert und bei Erreichen eines vorbestimmten Werts, d.h. bei Erreichen einer vorbestimmten Position des Zeigers 3 den Kontakt mit dem Kontaktstift 4 schließt.

Wie aus der Fig. 1b ferner zu entnehmen ist, kann sich der Zeiger 3 trotz Anliegens der Kontaktfahne 1 an dem Kontaktstift 4 aufgrund von deren Eigenelastizität bei weiter sinkendem Wert in Richtung Nullstellung bewegen, wobei sich die Kontaktfahne 1 über den Kontaktstift 4 schiebt und sich dabei durchbiegt.

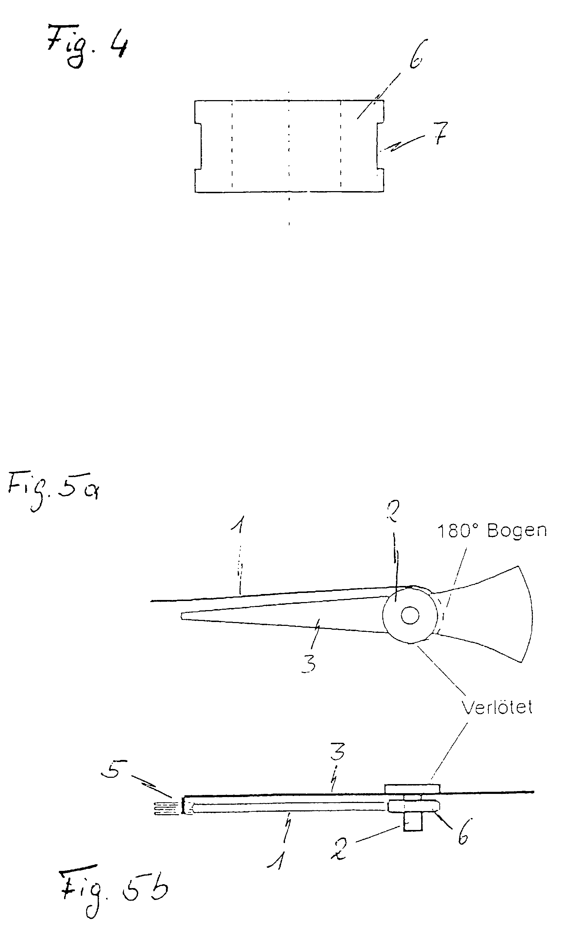

In den Fig. 4, 5a und 5b ist der konstruktive Aufbau des Zeigers 3 des analogen Anzeigeinstruments zusammen mit der Kontaktfahne 1 skizzenhaft dargestellt.

Demzufolge besteht der Zeiger 3 aus einem Aluminiumplättchen, in das in einem Mittenabschnitt eine Bohrung eingestanzt ist. In der Bohrung steckt drehfest die Zeigerbuchse 2 in Gestalt eines Zapfens, wie in Fig. 5b dargestellt ist, deren axiale Abmessung gegenüber einer Standardzeigerbuchse um ein vorbestimmtes Maß, vorzugsweise um ca. 1 bis 1,5 mm verlängert ist. Die Zeigerspitze ist gemäß der Fig. 5b ferner um ca. 1,5 bis 2 mm nach unten gebogen und bildet somit eine Mitnahmekante 5 für die Kontaktfahne 1 beim Öffnen des Kontakts.

Unterhalb des Zeigers 3 ist eine Messingbuchse 6 auf die Zeigerbuchse 2 aufgedrückt und drehfest auf der Zeigerbuchse 2 verlötet. Vorzugsweise ist die Bohrung in der Messingbuchse 6 als Preßpassung zur Zeigerbuchse 2 ausgeführt, um so eine sichere elektrische wie auch mechanische Verbindung herzustellen. Des weiteren hat die Messingbuchse 6 gemäß der Fig. 4 einen in Umfangsrichtung verlaufenden Einstich 7 zur Aufnahme und Positionierung der Kontaktfahne 1.

Wie in der Fig. 5a strichpunktiert dargestellt ist, ist die Kontaktfahne 1 an ihrem hinteren Ende in einem 180° - Bogen direkt um die Messingbuchse 6 geführt und am Endbereich des 180° - Bogens in den Einstich 7 eingesetzt. Für eine gute mechanische Verbindung ist die Kontaktfahne 1 an ihrem hinteren Ende zusätzlich an der Messingbuchse 6 verlötet. Die Kontaktfahne 1 ist dabei derart montiert, daß die Spitze der Kontaktfahne 1 ca. 3 mm vor der Zeigerspitze liegt (gerechnet von der Zeigerwelle aus). Des weiteren beträgt der Nachlauf, d.h. der Abstand zwischen der Zeigerspitze und der Kontaktfahnenspitze in Umfangsrichtung infolge des vorstehend erwähnten Winkelversatzes ca. 2 mm. Die Zeigerbuchse 2 selbst ist mit einer Bohrung ausgebildet, in welche die nicht weiter dargestellte Zeigerwelle der Analoganzeigevorrichtung eingesteckt ist.

Für den elektrischen Anschluß der Kontaktfahne 1 ist es vorgesehen, eine Kabellitze (nicht gezeigt) an eine ebenfalls nicht weiter dargestellte Zeigerwerkplatine anzulöten, die über eine Werkspirale, die Zeigerwelle und die Zeigerbuchse 2 mit der Kontaktfahne 1 elektrisch verbunden ist.

Die Relativlage der Kontaktfahne 1 zu dem Zeiger 3 sollte ferner so gewählt sein, daß der maximale Winkel, den der Zeiger 3 nach dem Schaltpunkt (d.h. nach Kontaktschluß der Kontaktfahne 1 mit dem Kontaktstift 4) noch bis zum Nullanschlag 8 zurücklegt, ca. 20° nicht überschreitet.

Des weiteren besteht auch die Möglichkeit, durch einen größeren Wickelwinkel der Kontaktfahne 1 um die Messingbuchse 6 deren Biegekräfte zu reduzieren, um den Schaltpunkt, in welchem die Kontaktfahne 1 mit dem Kontaktstift 4 in Berührung kommt, durch entsprechendes Biegen der Kontaktfahne 1 besser nachjustieren zu können.

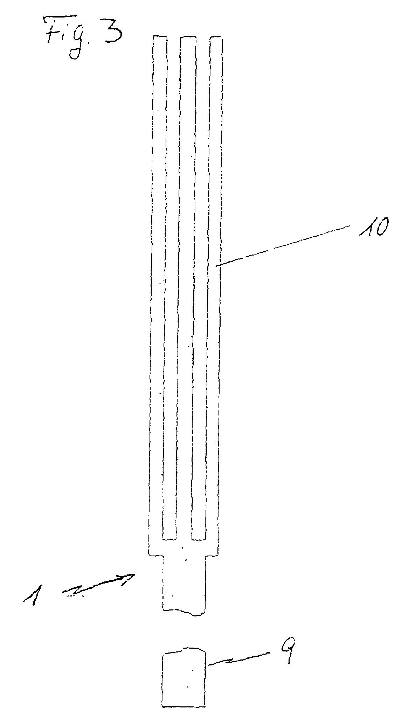

In Fig. 3 ist die Kontaktfahne 1 in einer Draufsicht dargestellt. Demzufolge besteht die Kontaktfahne 1 aus einem plättchenförmigen Schaft 9, der an seinem freien äußeren Ende in drei Zacken 10 aufgegabelt ist, während sein hinteres Ende zu dem 180° Bogen umgeformt ist. Als Werkstoff zur Herstellung der Kontaktfahne 1 wird ein Blechteil mit einer Wandstärke von ca. 0.05 mm verwendet, das per Laser an seinem einen Ende in einzelne Kontaktfahnen eingeschnitten wird. Vorteilhaft ist es, wenn die Kontaktseiten der Zacken 10 ballige Kontaktflächen ausbilden, um bei den geringen Anlagekräften zwischen der Kontaktfahne 1 und dem Kontaktstift 4 einen sicheren Kurzschluß zu erreichen. Für eine bessere Leitfähigkeit ist die Kontaktfahne 1 ferner zumindest im Bereich der Zacken 10 hartvergoldet.

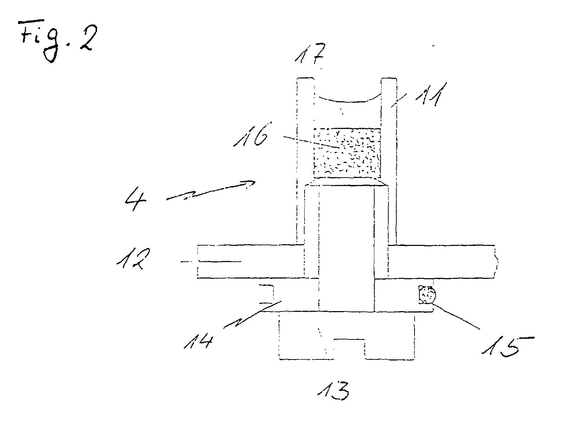

Schließlich zeigt die Fig. 2 den Kontaktstift 4 gemäß dem bevorzugten Ausführungsbeispiel.

Der Kontaktstift 4 besteht vorliegend aus einer elektrisch leitenden nicht ferritischen Kontakthülse 11 mit einem Innengewinde und einer hartvergoldeten Mantelfläche. Die Kontakthülse 11 ist stirnseitig auf ein Zifferblatt 12 des Anzeigevorrichtungs aufgesetzt und mittels einer von der Rückseite des Zifferblatts 12 eingesteckten Schraube 13 fixiert. Zwischen dem Schraubenkopf und dem Zifferblatt 12 ist eine Unterlegscheibe 14 zwischengefügt, die gleichzeitig eine Aufnahme für ein Anschlußkabel oder Litze 15 bildet. In der Kontakthülse 11 befindet sich eine Hartferrit-Magnetronde 16, die an der Stirnseite der Schraube 13 anliegt und an der offenen Stirnseite der Kontakthülse 11 durch einen eingefüllten Siegellack 17 fixiert ist. Die Kontakthülse 11 dient somit als ein Magnetträger und Abstandshalter für den Permanentmagneten 16. Sie stellt ferner mit der Kontaktfahne 1 den elektrischen Kontakt zur Signalgabe für ein an die Kontakteinrichtung angeschlossenes Zusatzvorrichtung her.

Als Zifferblatt 12 dient ein leicht modifiziertes Standardkunststoffzifferblatt mit einem Stift 8 als Nullanschlag. Jedoch ist das Zifferblatt 12 vorliegend mit einer Bohrung oder einem eingespritzen Loch zur Befestigung der Kontakthülse oder -büchse 11 versehen. Die Lage dieser Bohrung bzw. der Kontaktbüchse 11 ist so gewählt, daß die Zeigerspitze nicht an der Kontaktbüchse 11 anstößt und ferner die Kontaktbüchse 11 noch einen geringen Abstand zum Rand einer Sichtscheibe des Anzeigegeräts hat.

Die Funktionsweise der vorstehend beschriebenen Kontakteinrichtung wird nachfolgend anhand eines Manometers als ein mögliches Beispiel des Anzeigegeräts näher erläutert.

Wie in Fig. 1a gezeigt wird, bewegt sich der Zeiger 3 eines Manometers bei einem vorbestimmten Druck aus der Nullage um einen definierten Drehwinkel, um diesen an der Skalierung des Zifferblatts 12 in einer entsprechenden Druckeinheit anzuzeigen. In dieser Position befindet sich die Kontaktfahne 1 winkelversetzt, d.h. in Ausschlagsrichtung geringfügig vor dem Zeiger 3, in einer vom Kontaktstift 4 abgehobenen Lage. Bei fallendem Druck wandert der Zeiger 3 in Richtung Nullstellung zurück, wobei die Kontaktfahne 1, die unmittelbar an der Zeigerbuchse 2 angelötet ist, integral mit dem Zeiger 3 mit wandert. Wird bei dieser Drehbewegung der Abstand zwischen der Kontaktfahne 1 und dem Kontaktstift 4 ausreichend klein, wird die gegabelte Spitze der Kontaktfahne 1 von dem in der Kontaktbüchse 11 enthaltenen Permanentmagneten 16 angezogen, wodurch der sogenannte Magnetsprungeffekt ausgelöst wird.

Die gabelförmige Kontaktfläche der Kontaktfahne 1 kommt dabei schlagartig auf der Kontaktbüchse 11 zum Anliegen und schließt den elektrischen Kontakt mit der Büchse 11. Die Magnetkraft gleicht dabei die geringen fertigungstechnisch bedingten Abstandsunterschied der einzelnen Zacken 10 zur Kontaktbüchse 11 über deren Eigenelastizität aus und gewährleistet so trotz der geringen Anlagekräfte einen sicheren Kontaktschluß. Selbst wenn ein Zacken 10 infolge von Verschmutzungen der Oberfläche der Kontaktbüchse 11 keinen elektrischen Kontakt hat, reichen die übrigen Zacken 10 für einen ausreichenden Kontaktschluß für ein sicheres Durchschalten aus. In dieser Lage wird somit eine elektrische Verbindung zwischen dem an der Werkplatine angeschlossenen Masseanschluß über die Werkspirale, die Zeigerwelle, die Zeigerbüchse 2, die Lötbuchse 6, die Kontaktfahne 1, die Kontaktbuchse 4, die Schraube 13 und die Unterlegscheibe 14 zur zweiten Litze 15 hergestellt.

Bei weiter fallendem Druck bewegt sich der Zeiger 3 über den Kontaktstift 4 hinaus in Richtung Nullanschlag 8, wobei sich die Kontaktfahne 1 in Radialrichtung nach außen über die Kontaktbüchse 11 schiebt und sich dabei ferner durchbiegt, wie dies in der Fig. 1b gezeigt wird. Durch diese Schiebebewegung der Kontaktfahne 1 auf der Mantelfläche der Kontaktbüchse 11 tritt eine Art Selbstreinigung der Kontaktflächen ein, bei der Schmutzpartikel insbesondere auf der Mantelfläche der Kontaktbüchse 11 entfernt werden.

Bei erneut steigendem Druck bewegt sich der Zeiger 3 der in dem Anzeigegerät eingebauten Anzeigevorrichtung zunächst soweit, bis die umgebogene Zeigerspitze, d.h. die Mitnahmekante 5, die Kontaktfahne 1 berührt. Bei weiterem Zeigerausschlag löst sich der elektrische Kontakt unabhängig von der Zeigergeschwindigkeit sprungartig, sobald das Zeigermoment das durch die magnetische Kontaktkraft ausgelöste übersteigt. Die Mitnahmekante 5 hilft dabei, die Kontaktfahne 1 ohne plastische Verbiegung abzulösen.

Es liegt auf der Hand, daß das vorstehend beschriebene bevorzugte Ausführungsbeispiel in unterschiedlichster Weise abgewandelt werden kann.

So ist es beispielsweise denkbar, die Kontaktfahne 1 anstelle an der Zeigerbüchse 11 auf dem Zifferblatt 12 zu befestigen und den Zeiger 3 zur Betätigung der Kontaktfahne 1 für einen Kontaktschluß zu verwenden. Des weiteren kann die Kontaktfahne 1 als eine Blattfeder mit verstellbarer Federkraft ausgebildet werden. Auch können mehrere ortsfeste Kontaktstifte 4 an dem Zifferblatt 12 montiert sein, beispielsweise zur Definition eines unteren und oberen Grenzwerts.

Gemäß dem bevorzugten Ausführungsbeispiel ist die Kontakteinrichtung als Magnetsprungkontakt ausgeführt. Als eine Vereinfachung ist es aber auch möglich, die Kontakte aus einem nicht magnetisierten Material auszubilden. Diese Ausführungsvariante würde dann einem Schleichkontakt entsprechen. Auch können die Kontakte selbst aus einem ferromagnetischen, magnetisiertem Basismaterial mit oder ohne zusätzliche Permanentmagnetunterstützung am Kontaktstift 4 ausgebildet sein, um den Magnetsprungeffekt mit geringer Lichtbogenneigung zu erzielen.

Schließlich ist die erfindungsgemäße Kontakteinrichtung nicht auf Manometer beschränkt sonder kann bei allen anderen bekannten Analoganzeigegeraten eingesetzt werden.

## Patentansprüche

1. Kontakteinrichtung für eine Analoganzeigevorrichtung mit einer Zeigereinheit (2, 3) und einem Zifferblatt (12) und einer elastischen Kontaktfahne (1), die durch die Zeigereinheit (2, 3) derart betätigbar ist, daß bei Erreichen einer bestimmten Position der Zeigereinheit (2, 3) die Kontaktfahne (1) mit einem ortsfesten Kontakt (4) kurzschließt, wobei die Zeigereinheit (2, 3) aus einem Zeiger (3) und einer Zeigerbuchse (2) besteht, **dadurch gekennzeichnet, daß** die Kontaktfahne (1) an der Zeigerbuchse (2) befestigt ist, wobei die Kontaktfahne (1) an ihrem hinteren Endbereich in einem Bogen von im wesentlichen 180° spiralförmig um die Zeigerbuchse (2) geführt ist, um dann in einen im wesentlichen geraden Schaft (9) überzugehen.

2. Kontakteinrichtung nach Anspruch 1, **dadurch gekennzeichnet, daß** die Kontaktfahne (1) an ihrem hinteren Ende an der Zeigereinheit (2, 3) fixiert ist.

3. Kontakteinrichtung nach einem der vorstehenden Ansprüche, **dadurch gekennzeichnet, daß** die Zeigerbuchse (2) auf einer Drehwelle der Analoganzeigevorrichtung befestigt ist.

4. Kontakteinrichtung nach Anspruch 3, **dadurch gekennzeichnet, daß** der Schaft (9) am vorderen Endbereich der Kontaktfahne (1) in mehrere Zacken (10) aufgegabelt ist, welche Kontaktflächen bilden.

5. Kontakteinrichtung nach Anspruch 4, **gekennzeichnet durch** eine Messingbuchse (6), die an der Zeigerbuchse (2) fixiert ist und an der die Kontaktfahne (1) angelötet ist.

6. Kontakteinrichtung nach einem der vorstehenden Ansprüche, **dadurch gekennzeichnet, daß** der ortsfeste Kontakt (4) ein Kontaktstift bestehend aus einer Kontakthülse (11) ist, in der ein Permanentmagnet (16) angeordnet ist, der auf die Kontaktfahne (1) bei einem bestimmten Abstand eine Anziehungskraft ausübt, die unter Überwindung der Eigenelastizität die Kontaktfahne (1) auf die Kontakthülse (11) zieht.

7. Kontakteinrichtung nach einem der vorstehenden Ansprüche, **dadurch gekennzeichnet, daß** der ortsfeste Kontakt (4) auf dem Zifferblatt (12) montiert ist.

8. Kontakteinrichtung nach einem der vorstehenden Ansprüche, **dadurch gekennzeichnet, daß die** Elastizität der Kontaktfahne (1) so gewählt ist, daß die Zeigereinheit (2, 3) auch nach In-Kontakt-kommen der Kontaktfahne (1) mit dem ortsfesten Kontakt (4) in Richtung Null- oder maximaler Ausschlagsstellung bewegbar ist.

9. Kontakteinrichtung nach einem der vorstehenden Ansprüche, **dadurch gekennzeichnet, daß** die Kontaktfahne (1) sowie der ortsfeste Kontakt (4) hartvergoldet sind.

10. Kontakteinrichtung nach Anspruch 1, **dadurch gekennzeichnet, daß** die Kontaktfahne (1) an ihrem hinteren Ende auf dem Zifferblatt (12) montiert ist.

11. Kontakteinrichtung nach einem der vorstehenden Ansprüche, **dadurch gekennzeichnet, daß** die Zeigereinheit (2, 3) an der Zeigerspitze einen Vorsprung (5) hat, der eine Mitnahmekante für die Kontaktfahne (1) bildet.

12. Manometer mit einer Analoganzeigevorrichtung bestehend aus einer Zeigereinheit (2, 3) und einem Zifferblatt (12) **gekennzeichnet durch** eine Kontakteinrichtung gemäß einem der Ansprüche 1 bis 11.

## Claims

1. Contact device for an analogue indicating apparatus with a pointer unit (2, 3) and a dial plate (12) and a resilient contact tag (1) which is operable by the pointer unit (2, 3) so that when a specified position of the pointer unit (2, 3) is reached, the contact tag (1) short-circuits with a fixed contact (4), wherein the pointer unit (2, 3) comprises a pointer (3) and a pointer bush (2), **characterized in that** the contact tag (1) is attached to the pointer bush (2) with its rear end region led in a spiral around the pointer bush (2) in an arc of substantially 180° and then extending as a substantially straight shaft (9).

2. Contact device according to Claim 1, **characterized in that** the contact tag (1) is fixed at its rear end to the pointer unit (2, 3).

3. Contact device according to one of the preceding claims, **characterized in that** the pointer bush (2) is mounted on a rotary shaft of the analogue indicating apparatus.

4. Contact device according to Claim 3, **characterized in that** the shaft (9) is forked in the forward end region of the contact tag (1) into a plurality of prongs (10) which form contact surfaces.

5. Contact device according to Claim 4, **characterized by** a brass bush (6) which is fixed to the pointer bush (2) and to which the contact tag (1) is soldered.

6. Contact device according to any one of the preceding claims, **characterized in that** the fixed contact (4) is a contact pin comprising a contact sleeve (11) in which a permanent magnet (16) is arranged which at a specific distance exerts an attractive force on the contact tag (1) that by overcoming the inherent resilience of the contact tag (1) draws the latter on to the contact sleeve (11).

7. Contact device according to any one of the preceding claims, **characterized in that** the fixed contact (4) is mounted on the dial plate (12).

8. Contact device according to any one of the preceding claims, **characterized in that** the resilience of the contact tag (1) is selected so that the pointer unit (2, 3) is able to move in the directions towards zero or maximum deflection even after the contact tag (1) comes into contact with the fixed contact (4).

9. Contact device according to any one of the preceding claims, **characterized in that** both the contact tag (1) and the fixed contact (4) are hard gold-plated.

10. Contact device according to Claim 1, **characterized in that** the contact tag (1) is mounted at its rear end on the diai plate (12).

11. Contact device according to any one of the preceding claims, **characterized in that** the pointer unit (2, 3) has a projection (5) at the tip of the pointer, which forms a pusher for the contact tag (1).

12. Pressure gauge with an analogue indicating apparatus comprising a pointer unit (2, 3) and a dial plate (12), **characterized by** a contact device according to any one of Claims 1 to 11.

## Revendications

1. Dispositif de contact pour un dispositif d'affichage analogique comportant une unité à aiguille (2, 3) et une plaque (12) portant des chiffres, et une languette de contact élastique (1), qui peut être actionnée par l'unité à aiguille (2, 3) de telle sorte que, lorsqu'une position déterminée de l'unité à aiguille (2, 3) est atteinte, la languette de contact (1) établit un court-circuit avec un contact fixe (4), l'unité à aiguille (2, 3) étant formée par une aiguille (3) et une douille d'aiguille (2), **caractérisé en ce que** la languette de contact (1) est fixée à la douille d'aiguille (2), la languette de contact (1) étant guidée, hors de sa partie d'extrémité arrière, suivant un arc égal sensiblement à 180° selon une disposition en spirale autour de la douille d'aiguille (2), pour se prolonger ensuite sous la forme d'une tige essentiellement rectiligne (9).

2. Dispositif de contact selon la revendication 1, **caractérisé en ce que** la languette de contact (1) est fixée, au niveau de son extrémité arrière, à l'unité à aiguille (2, 3).

3. Dispositif de contact selon l'une des revendications précédentes, **caractérisé en ce que** la douille à aiguille (2) est fixée sur un arbre rotatif du dispositif d'affichage analogique.

4. Dispositif de contact selon la revendication 3, **caractérisé en ce que** la tige (9) est ramifiée, au niveau de l'extrémité avant de la languette de contact (1), de manière à former plusieurs dents (10), qui forment des surfaces de contact.

5. Dispositif de contact selon la revendication 4, **caractérisé par** une douille en laiton (6), qui est fixée à la douille d'aiguille (2) et sur laquelle la languette de contact (1) est brasée.

6. Dispositif de contact selon l'une des revendications précédentes, **caractérisé en ce que** le contact fixe (1) est une tige de contact constituée par une douille de contact (11), dans laquelle est disposé un aimant permanent (16), qui, en surmontant l'élasticité propre de la languette de contact (1), applique une traction à la douille de contact (11), pour une distance déterminée, applique à la languette de contact (1), une force d'attraction.

7. Dispositif de contact selon l'une des revendications précédentes, **caractérisé en ce que** le contact fixe (4) est monté sur la plaque pourvue de chiffres (12).

8. Dispositif de contact selon l'une des revendications précédentes, **caractérisé en ce que** l'élasticié de la languette de contact (1) est choisie de telle sorte que l'unité à aiguille (2, 3) est également déplaçable en direction de la position zéro ou de la position maximale de déviation, après la venue de la languette de contact (1) en contact avec le contact fixe (4) .

9. Dispositif de contact selon l'une des revendications précédentes, **caractérisé en ce que** la languette de contact (1) ainsi que le contact fixe (4) sont recouverts d'une pellicule d'or dure.

10. Dispositif de contact selon la revendication 1, **caractérisé en ce que** la languette de contact (1) est montée, par son extrémité arrière, sur la plaque pourvue de chiffres (12).

11. Dispositif de contact selon l'une des revendications précédentes, **caractérisé en ce que** l'unité à aiguille (2, 3) possède, au niveau de la pointe de l'aiguille, une partie saillante (5), qui forme un bord d'entraînement pour la languette de contact (1).

12. Manomètre comportant un dispositif d'affichage analogique constitué par une unité à aiguille (2, 3) et une plaque pourvue de chiffres (12), **caractérisé par** un dispositif de contact selon l'une des revendications 1 à 11.
